# EUROPEAN PATENT SPECIFICATION

(11) **EP 0 399 627 B1**
(45) Date of publication and mention of the grant of the patent: **24.04.1996**
(21) Application number: 90202027.0
(22) Date of filing: 14.10.1987
(51) Int. Cl.: A01F 25/20

(54) **An implement for cutting fodder such as silage**
Gerät zum Schneiden von Futter, z.B. Silagegut
Appareil pour couper du fourrage comme l'ensilage

(30) Priority: 16.10.1986 NL 8602592
(43) Date of publication of application: 28.11.1990
(62) Divisional of application: 87201975.7
(73) Proprietor: C. van der Lely N.V., NL-3155 PD Maasland (NL)
(72) Inventor: Van der Lely, Cornelis, Zug (CH)
(74) Representative: Mulder, Herman

(56) References cited:
- EP-A- 0 140 433
- DE-A- 3 023 986
- DE-A- 3 601 112
- DE-U- 8 625 229

## Description

The invention relates to an implement for cutting fodder such as silage, comprising a frame and, slidably coupled thereto, a cutter member which is movable through the fodder and includes a U-shaped carrier supporting at least a first and a second knife, the first and second knife being movable along a side portion and an intermediate portion of the carrier respectively, and drivable by a hydraulic ram and one or more levers.

A suchlike implement is known from DE-A 33 12 916. In this machine a hydraulic ram, driving all knives of the implement, is mounted to the frame of the implement. The knives are driven by a set of rods and levers which transfer the drive of the ram to all respective knives. The construction brings along relatively many mechanical parts and relatively long rods which raise the manufacturing and maintenance costs of the implement.

The present invention seeks to improve the known implement in general and in respect of the described features in particular. According to the invention, an improvement of the known machine is realized in that the hydraulic ram is directed upwardly and mounted to the carrier, predominantly within the upper and lower boundaries thereof, a lever being provided for transforming the vertical movement of the hydraulic ram into a horizontal movement of the first or second knife, the lever being pivotally connected to the relevant carrier portion and the pivot axis of said connection being perpendicular to said relevant carrier portion. In this way, the mechanical parts of the drive remain relatively close to the respective knives, while the surface occupied by a hydraulic ram, as seen in plan view, and therewith the resistance at moving through the fodder, remains minimized.

For a better understanding of the invention and to show how the same may be carried into effect, reference will now be made, by way of example, to the accompanying drawings, in which:
Figure 1 is a perspective view which roughly shows the main parts of the implement which are a basis for the embodiments shown in the subsequent drawings;
Figure 2 is a view taken in the direction of the arrow II in Figure 1 of a second embodiment;
Figure 3 is a plan view taken in the direction of the arrow III in Figure 2.

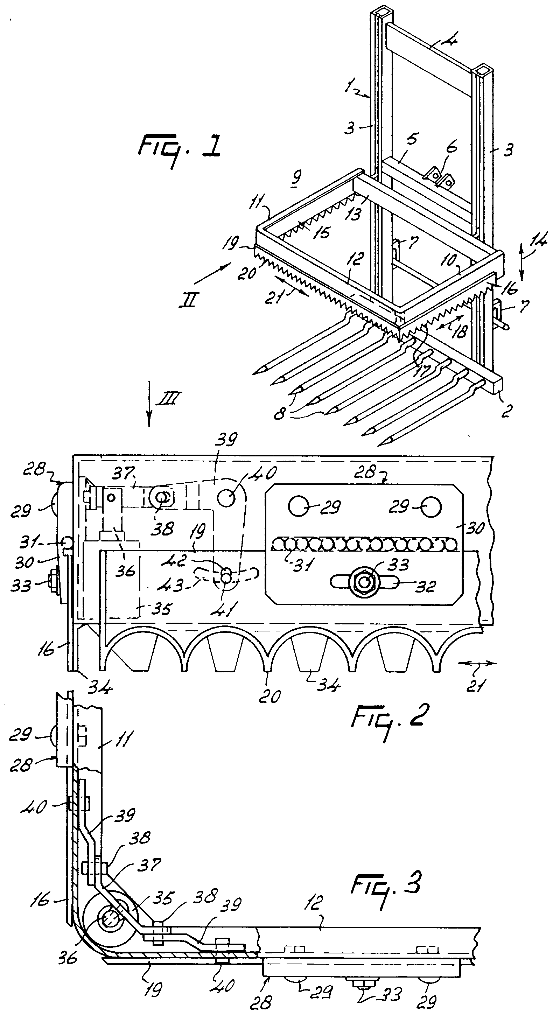

Figure 1 shows the main parts of an implement according to the invention, which form a basis for the embodiment shown in the drawings. The implement shown in Figure 1 comprises a frame 1 which, during operation, is in an approximately vertical position and is in the shape of a rectangular frame work which includes an approximately horizontal lower beam 2, to whose ends approximately vertical pillars 3 are rigidly connected. The upper ends of the pillars 3 are interconnected, likewise rigidly, by an upper beam 4 which is arranged parallel to the lower beam 2. The two pillars 3 are also rigidly interconnected by an intermediate beam 5 in a region located between the beams 2 and 4. Halfway its length, the beam 5 is provided with connection points 6 intended for coupling the implement to the upper lifting arm of a three-point lifting hitch of a tractor carrying and driving the said implement. Two spaced-apart connection points 7 are disposed on the pillars 3 near the lower beam 2; the connection points 7 serve to connect the implement to the lower arms of the afore-mentioned lifting hitch of the tractor.

At the side of the frame 1 facing away from the connection points 6 and 7, a plurality of mutually parallel teeth 8 are provided which are rigidly connected to the lower beam 2. The teeth 8 are all provided at the same distance from a horizontal plane and together constitute a carrier member for a silage block to be cut out. The ends of the teeth 8 facing away from the lower beam 2 are pointed.

The frame 1 furthermore carries a cutter member 9 which also extends parallel to a horizontal plane. The active part of the cutter member 9 comprises two interspaced, mutually parallel side portions 10 and 11, whose relative spacing approximately defines the working width of the cutter member 9. At the sides facing away from the frame 1, the side portions 10 and 11 are interconnected by an intermediate section 12. In a plan view, the side portions 10 and 11 and the intermediate section 12 basically constitute a carrier of the U-shaped cutter member 9. As is shown in Figure 1, the ends of the side portions 10 and 11 facing the frame 1 are interconnected by a connecting section 13, by means of which the cutter member 9 is fitted to the two pillars 3. The connecting section 13, and hence the entire cutter member 9, is drivably movable upwardly and downwardly in height along the two pillars 3 in the direction indicated by the arrows 14 in Figure 1. This drive in the direction of the arrow 14 is not shown in further detail, and is designed such, in a manner known per se, that the cutter member 9 can be moved with great force through the silage in the direction of the teeth 8 and can also be moved upwardly in the direction of the upper beam 4.

The side portions 10 and 11 and the intermediate section 12 comprise a rigid carrier 15 which, in a plan view, is in the shape of a U and is designed as one integral component part. At its side facing the frame 1, the carrier 15 is rigidly connected to the connecting section 13. In a plan view, the carrier 15 is of a width which is as narrow as possible in view of the driving forces required for its downward movement through the silage to be cut out.

At its outer and bottom side, respectively, each side portion 10 and 11 is provided with a plate-shaped steel knife 16 which, in a horizontal view, is of a substantially rectangular shape, whose main dimension extending in the horizontal direction is an order of magnitude greater than the vertical dimension. The horizontal upper edge and the relatively short vertical side edges of each knife 16 are rectilinear. The horizontal lower edge of each knife 16 is provided with downwardly pointing teeth 17. The two knives 16, which form part of the side portions 10 and 11, are drivable such, in a manner still further to be described, that they oscillate in a direction which is approximately parallel to a horizontal plane (arrows 18 in Figure 1).

At its outer side and its bottom side, the intermediate section 12 of the cutter member 9 is also provided with a plate-shaped knife 19, whose shape can be defined in a similar manner as in the foregoing for the knives 16; in general, however, the longitudinal dimension of the knife 19, which is directed parallel to the frame work of the frame 1, will be greater than that of the knives 19. The knife 19 is provided with downwardly directed teeth 20 and, in a manner still further to be described, also performs an ocsillating movement which is approximately parallel to a horizontal plane, in the direction indicated by the arrows 21.

The housing 30 is contiguous to the carrier 15, but in the region of the straight upper boundary of the knives 16 and 19, respectively, encloses a through-shaped concavity in which a row of hardened balls 31 is accommodated. At their upper sides the balls bear against a bearing surface of the housing 30 and at their bottom sides against the straight upper edge of the corresponding knife 16, 19 respectively. Below the row of balls, the housing 30 is provided with a horizontal slotted aperture 32, the length of which is equal to or slightly larger than the stroke of the relevant knife caused by the cylinders 35. In the region of a slotted aperture 32 there is fitted (only) to the knife a pin 33 which projects outwardly through the slotted aperture and outside the housing 30 is provided with a widened portion which bears on the edges of the slotted aperture.

When the knife is moved to and fro, it is bearing-supported by the row of balls 31 in the housing 30 and hence on the carrier 15, so that the force to be produced by the cylinder 35 can be reduced considerably, whilst the pin 33 prevents the possibility of the knife moving away from the carrier 15. Preferably, each one of the knives 16 and the knife 19 is provided with two or more ball-bearings 28.

As is apparent from Figure 2, the carrier 15 is extended downwardly by means of a counter-knife 34 provided with teeth having e.g. the same pitch as the teeth 17 and 20, respectively. During operation, the counter-knife is stationary relative to the carrier 15.

Figures 2 and 3 showing the ball-bearing 28, show an embodiment with vertically arranged hydraulic cylinders 35 which are disposed at the inner side of the carrier 15 in the two corners of the cutter member. The cylinders themselves are rigidly connected there to the carrier 15.

The upwardly extending piston rod 36 of each hydraulic cylinder 35 carries at its upper end a horizontally directed cross beam 37 which is arranged obliquely in the relevant corner and is located symmetrically relative to the centre line of the piston rod. At its both ends, the cross beam 37 is provided with pins 38 which effect a pivotal connection to the ends of levers 39 which are pivotally bearing-supported about horizontal pins 40 at the carrier 15. In the mid-way position of the piston of the cylinder 35, a connecting line between the centre line of each pin 38 and the centre line of the associated pin 40 is approximately in a horizontal position, in which position the other leg of the lever 39 points straightly downwards. This other leg is provided at its end with a horizontal pin 41. The ends of the cross beam 37 are bent such that the two levers 39, which are arranged symmetrically relative to the piston rod 36, are located parallel to the adjacent portions of the carrier 15 and the pins 38, 40 and 41 are directed perpendicularly to said carrier portion.

However, the afore-mentioned pin 41 is provided capable of movement in a short slotted aperture 42 which points towards the pin 40 and is provided in the downwardly extending leg of the lever 39. The pin 41 itself is rigidly connected to the nearby knives 16 and 19, respectively. To that end, the nearby portion of the carrier 15 is provided with a slotted aperture 43 which is in the shape of an arc of a circle and is folded about the centre line of the pin 40.

The two hydraulic cylinders 35 are so loaded and controlled by means of a control valve that, when the piston 36 of one of the cylinders moves outwardly, the piston rod of the other cylinder moves inwardly. This movement is coupled such that these oppositely performed movements are of the same magnitude.

When the piston rod 36 of the cylinder 35 shown in Figure 2 moves outwardly in upward direction, the cross beam 37 also moves upwardly and the downwardly pointing leg of the lever 39 (Figure 2) moves towards the corner of the cutter member. This also holds for the lever 39 located at the other side of this same corner. This implies that the lever 39 takes along the pin 41 connected to the knife and hence the knife itself, so that the two knives 16 and 19, respectively, move towards the corner of the cutter member. The length of the knives is chosen such that their extreme ends just do not touch each other.

It should be noted that the slotted aperture 42 provided in the lever cannot cause metal portions to rattle during the drive of the knives. The direction in which the pin 41 is located by the edge of the slotted aperture 42 is perpendicular to the longitudinal direction of the slotted aperture, so that, if the pin is provided with a tight fit therein, no jerky movements will be produced. The same holds for a slotted aperture provided near the pin 38 in the cross beam 37 and extending horizontally (Figure 2).

The drive mechanism associated with the hydraulic cylinder arranged in the other corner of the cutter member is identical to that illustrated in Figures 2 and 3. The two cylinders 35 are so driven with the aid of a control valve that, when the piston rod of one of the cylinders moves outwardly, the piston rod of the other cylinder moves inwardly into the cylinder.

Also in this embodiment, the drive mechanism of the oscillating knives is of such a construction that the drive forces intended for driving a certain knife are not transferred via another knife; in this case the drive forces are transferred directly by the knife.

The forces to be exerted by the two cylinders are relatively slight as compared with corresponding cylinders used in the prior art embodiment, since each cylinder need only drive half of the entire knife-length; consequently, the diameter of the cylinders may be comparatively small, so that an arrangement in a corner of a cutter member, seen in plan view, does not inhibit or hardly inhibits the silage moving inside the U-shaped cutter member upon downward movement of said cutter member along the frame. The diameter of the cylinders 35 can be reduced further by using a comparatively high pressure for the hydraulic fluid.

## Claims

1. An implement for cutting fodder such as silage, comprising a frame (1) and, slidably coupled thereto, a cutter member (9) which is movable through the fodder and includes a U-shaped carrier (15) supporting at least a first (16) and a second (19) knife, the first and second knife being movable along a side portion (10, 11) and an intermediate portion (12) of the carrier (15) respectively, and drivable by a hydraulic ram (35) and one or more levers (39), characterized in that the hydraulic ram (35) is directed upwardly and mounted to the carrier (15) predominantly within the upper and lower boundaries thereof, a lever (39) being provided for transforming the vertical movement of the hydraulic ram (35) into a horizontal movement of the first and second knife (16, 19), the lever (39) being pivotally connected to the relevant carrier portion (10, 11, 12) and the pivot axis of said connection being perpendicular to the said relevant carrier portion (10, 11, 12).

2. An implement as claimed in claim 1, characterized in that the knife (16, 19) is slidably mounted to the carrier (15) by means of slots (32).

3. An implement as claimed in claim 1 or 2, characterized in that the carrier (15) is provided with tines (34).

4. An implement as claimed in claims 1, 2 or 3, characterized in that drive members (37 - 39) coupling a knife (16, 19) with a hydraulic ram (35) extend at least predominantly above the respective knife (16, 19).

5. An implement as claimed in any one of the preceding claims, characterized in that the drive members (38 - 42) of two respective knives (16 and 17), coupling a knive (16, 19) to a hydraulic ram (35), are interconnected by an intermediate member (37) coupled to a single hydraulic ram (35) located between said respective knives (16 and 19).

6. An implement as claimed in any one of the preceding claims, characterized in that the implement is provided with coupling points (6, 7) for coupling the implement to the three-point lifting device of a tractor.

7. An implement as claimed in any one of the preceding claims, characterized in that the lever (39) comprises a slotted aperture (42) extending perpendicular to the direction in which a pin (41) extending therethrough is loaded.

8. An implement as claimed in any one of the preceding claims, characterized in that a cross beam (37) connecting the piston rod (36) of the hydraulic cylinder (35) with the lever (39) comprises a slotted aperture extending perpendicular to the direction in which the lever (39) is loaded.

## Patentansprüche

1. Gerät zum Schneiden von Futter, wie z. B. Silage, mit einem Rahmen (1) und einer an ihm verschiebbar angeordneten Schneidvorrichtung (9), die durch das Futter hindurch zu bewegen ist und einen U-förmigen Träger (15) aufweist, der mindestens ein erstes Messer (16) und ein zweites Messer (19) trägt, die entlang einem Seitenteil (10, 11) bzw. einem Zwischenteil (12) des Trägers (15) zu bewegen und durch einen hydraulischen Arbeitszylinder (35) sowie einen oder mehrere Hebel (39) anzutreiben sind,
dadurch gekennzeichnet, daß der hydraulische Arbeitszylinder (35) aufwärts gerichtet und an dem Träger (15) überwiegend innerhalb dessen oberer und unterer Begrenzung angeordnet ist, wobei ein Hebel (39) vorgesehen ist, der die vertikale Bewegung des hydraulischen Arbeitszylinders (35) in eine horizontale Bewegung des ersten und des zweiten Messers (16, 19) umwandelt und der mit dem zugehörigen Trägerteil (10, 11, 12) schwenkbar verbunden ist, und wobei die diese Verbindung bildende Schwenkachse senkrecht zu dem jeweiligen Trägerteil (10, 11, 12) verläuft.

2. Gerät nach Anspruch 1,
dadurch gekennzeichnet, daß das Messer (16, 19) mittels Schlitzen (32) an dem Träger (15) verschiebbar angeordnet ist.

3. Gerät nach den Ansprüchen 1 oder 2,
dadurch gekennzeichnet, daß der Träger (15) Zähne (34) aufweist.

4. Gerät nach den Ansprüchen 1, 2 oder 3,
dadurch gekennzeichnet, daß Antriebselemente (37 bis 39) zur Verbindung eines Messers (16, 19) mit einem hydraulischen Arbeitszylinder (35) zumindest überwiegend oberhalb des jeweiligen Messers (16, 19) angeordnet sind.

5. Gerät nach einem der vorhergehenden Ansprüche,
dadurch gekennzeichnet, daß die jeweils eines von zwei Messern (16, 19) mit einem hydraulischen Arbeitszylinder (35) verbindenden Antriebselemente (38 bis 42) der beiden Messer (16 und 17) durch ein Zwischenglied (37) miteinander gekoppelt sind, das mit einem einzigen, zwischen den beiden Messern (16 und 19) angeordneten hydraulischen Arbeitszylinder (35) verbunden ist.

6. Gerät nach einem der vorhergehenden Ansprüche,
dadurch gekennzeichnet, daß das Gerät Anschlüsse (6, 7) zum Anschluß an die Dreipunkt-Hebevorrichtung eines Schleppers aufweist.

7. Gerät nach einem der vorhergehenden Ansprüche,
dadurch gekennzeichnet, daß der Hebel (39) einen Schlitz (42) aufweist, der sich senkrecht zu der Richtung erstreckt, in der ein in den Schlitz eingesetzter Stift (41) belastet ist.

8. Gerät nach einem der vorhergehenden Ansprüche,
dadurch gekennzeichnet, daß ein die Kolbenstange (36) des Hydraulikzylinders (35) mit dem Hebel (39) verbindender Quersteg (37) einen Schlitz aufweist, der sich senkrecht zu der Richtung erstreckt, in der der Hebel (39) belastet ist.

## Revendications

1. Appareil pour découper du fourrage tel que de l'ensilage, comprenant un châssis (1) et, relié de manière coulissante à celui-ci, un organe de coupe (9) qui est mobile à travers le fourrage et comporte un élément porteur (15) en forme de U supportant au moins un premier couteau (16) et un deuxième couteau (19), le premier couteau et le deuxième couteau étant mobiles respectivement le long d'une partie latérale (10, 11) et d'une partie intermédiaire (12) de l'élément porteur (15) et pouvant être entraînés par un vérin hydraulique (35) et un ou plusieurs leviers (39), **caractérisé** en ce que le vérin hydraulique (35) est dirigé vers le haut et est monté sur l'élément porteur (15), principalement à l'intérieur des limites supérieure et inférieure de celui-ci, un levier (39) étant prévu pour transformer le mouvement vertical du vérin hydraulique (35) en un mouvement horizontal du premier couteau (16) et du deuxième couteau (19), le levier (39) étant relié de manière pivotante à la partie correspondante (10, 11, 12) de l'élément porteur et l'axe de pivotement de ladite liaison articulée étant perpendiculaire à ladite partie correspondante (10, 11, 12) de l'élément porteur.

2. Appareil selon la revendication 1, caractérisé en ce que le couteau (16, 19) est monté coulissant sur l'élément porteur (15) au moyen de fentes (32).

3. Appareil selon la revendication 1 ou 2, caractérisé en ce que l'élément porteur (15) est muni de dents (34).

4. Appareil selon les revendications 1, 2 ou 3, caractérisé en ce que les organes d'entraînement (37 - 39) reliant un couteau à un vérin hydraulique (35) s'étendent au moins pour la plus grande part au dessus du couteau (16, 19) respectif.

5. Appareil selon l'une quelconque des revendications précédentes, caractérisé en ce que les organes d'entraînement (38-42) de deux couteaux respectifs (16 et 19) reliant un couteau (16, 19) à un vérin hydraulique (35) sont interconnectés par un organe intermédiaire (37) couplé à un seul vérin hydraulique (35) situé entre lesdits couteaux (16 et 19) respectifs.

6. Appareil selon l'une quelconque des revendications précédentes, caractérisé en ce que l'appareil est muni de points de couplage (6, 7) pour coupler l'appareil au dispositif de levage à trois points d'un tracteur.

7. Appareil selon l'une quelconque des revendications précédentes, caractérisé en ce que le levier (39) comprend une ouverture à fente (42) s'étendant perpendiculairement à la direction dans laquelle est sollicitée une broche (41) s'étendant à travers ladite ouverture.

8. Appareil selon l'une quelconque des revendications précédentes, caractérisé en ce qu'un bras transversal (37) reliant la tige de piston (36) du vérin hydraulique (35) au levier (39) comprend une ouverture à fente s'étendant perpendiculairement à la direction dans laquelle est sollicité le levier (39).
